# EUROPÄISCHE PATENTSCHRIFT

(11) **EP 1 331 038 B1**
(45) Veröffentlichungstag und Bekanntmachung des Hinweises auf die Patenterteilung: **09.04.2008**
(21) Anmeldenummer: 02027881.8
(22) Anmeldetag: 13.12.2002
(51) Int. Cl.: B05B 15/12, B05B 13/02

(54) **Vorrichtung zur Behandlung von Werkstücken**
Device for the treatment of workpieces
Dispositif pour le traitement de pièces

(30) Priorität: 23.01.2002 DE 10202377; 23.10.2002 DE 10249243
(43) Veröffentlichungstag der Anmeldung: 30.07.2003
(73) Patentinhaber: EISENMANN Anlagenbau GmbH & Co. KG, 71032 Böblingen (DE)
(72) Erfinder: Link, Kersten, 71120 Grafenau (DE); Renner, Wolfgang, 71032 Böblingen (DE)
(74) Vertreter: Ostertag, Ulrich

(56) Entgegenhaltungen:
- DE-C- 3 636 416

## Beschreibung

Die Erfindung betrifft eine Vorrichtung zur Behandlung von Werkstücken nach dem Oberbegriff des Patentanspruches 1.

Für die industrielle, in großen Stückzahlen stattfindende Behandlung von Werkstücken, insbesondere bei der Oberflächenbehandlung aber auch beim Trocknen von Werkstücken, werden seit geraumer Zeit Vorrichtungen bevorzugt, welche mit Hilfe eines Förderers die Werkstücke kontinuierlich oder diskontinuierlich durch einen Behandlungsbereich führen, weil derartige Vorrichtungen eine hohe Kapazität aufweisen und sich gut in eine Fertigungslinie eingliedern lassen. Der Behandlungsbereich befindet sich dabei in einem Behandlungraum, häufig nach Art einer Kabine, dessen Wände und Decke die Außenatmosphäre von der Innenatmosphäre des Behandlungsraumes trennen und insbesondere ein Entweichen des Behandlungsmediums und ggfs. von Wärme aus dem Behandlungsraum verhindern. Nachfolgend und in den Ansprüchen werden der Einfachheit halber unter dem Begriff "Wände" sowohl die Wände im engeren sprachlichen Sinne als auch die Decke verstanden.

Bei dem Behandlungsmedium kann es sich um eine Behandlungsflüssigkeit handeln, was beispielsweise beim Lackieren von Werkstücken oder bei Vorbereitungsprozessen für das Lackieren der Fall ist. Grundsätzlich kann es sich bei dem Behandlungsmedium jedoch auch um Gase, Dämpfe oder Flüssigkeits- oder Pulvernebel handeln, wie diese beispielsweise bei Spritzkabinen vorliegen.

Eine zweite Aufgabe der Wände des Behhandlungsraumes besteht darin, zu verhindern, daß von außen Schmutz in den Behandlungsbereich eindringt. Insbesondere wird darauf geachtet, daß diejenigen Komponenten des Förderers, von denen möglicherweise Schmutzstoffe ausgehen können, insbesondere die Antriebskomponenten, außerhalb des Behandlungsraumes angeordnet sind. Um die Werkstücke zu tragen, müssen derartige Förderer einen Tragarm aufweisen, der eine Wand des Behandlungsrames durchgreift und an dessen innerem Ende die Werkstücke gehalten werden. Die Wand des Behandlungsraumes muß hierzu einen Spalt aufweisen, der entlang des Bewegungsweges des Förderers verläuft und durch eine gesonderte Dichtungsanordnung verschlossen wird. Diese Dichtungsanordnung ist so ausgebildet, daß sie sich im Bereich des Tragarmes lokal öffnet.

Bei bekannten Vorrichtungen der eingangs genannten Art werden als Dichtungsanordnungen elastische Dichtlippen verwendet, deren Verläßlichkeit jedoch nicht immer gewährleistet ist.

Das Dokument DE 3636416 C1 offenbart den Oberbegriff des Anspruchs 1.

Eine andere derartige Behandlungsvorrichtung ist in der DE 198 48 946 C2 beschrieben. Bei dieser umfasst die Dichtungsanordnung eine Mehrzahl von nebeneinander angeordneten, segmentartigen Dichtelementen, die sich in seitlicher Richtung überlappen und zur Passage des Tragarmes um Schenkachsen verschwenkt werden. Derartige Schwenkachsen sind jedoch nicht in allen Fällen erwünscht.

Aufgabe der vorliegenden Erfindung ist es, eine Vorrichtung der eingangs genannten Art so auszugestalten, daß der Spalt zwischen den beiden Abschnitten der Wand zuverlässig abgedichtet ist und die Dichtungsanordnung gleichwohl wartungsarm und zuverlässig arbeitet.

Diese Aufgabe wird erfindungsgemäß mit den im Patentanspruch 1 angegebenen Mitteln gelöst.

Erfindungsgemäß werden also als Dichtelement keine Teile eingesetzt, die insgesamt eine Bewegung ausführen. Das Öffnen der Dichtungsanordnung beruht ausschließlich auf einer elastischen Verbiegung der Federlamellen. Die Abweiseinrichtungen sind so ausgestaltet, daß sie bei ihrer gemeinsam mit dem Tragarm durchgeführten Bewegung die oberen und unteren Federlamellen pflugartig auseinanderbiegen und so den Durchgang des Tragarmes gestatten. Danach kehren die Federlamellen selbsttätig wieder in ihre dichtende Ruhestellung zurück. Wo die Behandlung der Werkstücke eine Beaufschlagung mit Flüssigkeit beinhaltet, kann die Neigung der zu den beiden Sätzen gehörenden Federlamellen jeweils so gewählt und gehalten werden, daß Spritzflüssigkeit, die auf die Federlamellen trifft, ins Innere des Behandlungsraumes zurückfließt.

Die Federlamellen bestehen bevorzugt aus Federstahl, Edelstahl oder einem ggf. verstärkten Kunststoff.

Vorzugsweise ist ein Schild vorgesehen, der gemeinsam mit dem Tragarm bewegbar ist und denjenigen Bereich der Dichtungsanordnung abdeckt, in dem die Federlamellen aus ihrer Ruheposition ausgebogen sind. Dieser Schild stellt also einen zusätzlichen Schutz dagegen dar, daß Behandlungsmedium, insbesondere Behandlungsflüssigkeit, in dem lokal in der Umgebung des Tragarmes eröffneten Bereich der Dichtungsanordnung entweichen kann.

Die Abweiseinrichtungen sind bevorzugt Blechstreifen, die so gebogen sind, daß ihre Fläche überall etwa parallel zu den an ihnen anliegenden Bereichen der Federlamellen verlaufen. So ergibt sich eine verschleißarme und mit geringer Geräsuchentwicklung verbundene Führungswirkung der Abweiseinrichtungen.

Zweckmäßig ist ferner, daß die Abweiseinrichtungen so geführt sind, daß sie überall in ungefähr gleichem Abstand von den Rändern der Federlamellen an diesen anliegen. Der Abstand zwischen derjenigen Stelle der Federlamellen, an denen die Abweiseinrichtungen angreifen, und dem Rand der Federlamellen, an dem diese befestigt sind, bleibt daher überall ungefähr konstant.

Besonders bevorzugt wird eine Ausführungsform der Erfindung, bei welcher der Spalt zwischen dem ersten Abschnitt und dem zweiten Abschnitt der Wand des Behandlungsraumes an der Außenseite zusätzlich durch einen Faltenbalg verschlossen ist und ein Abweiser vorgesehen ist, der mit dem Tragarm mitbewegbar ist und mindestens eine Rampenfläche aufweist, an welcher ein Rand des Faltenbalgs lokal anliegt und welche den Rand des Faltenbalgs so verschiebt, daß der Tragarm den Faltenbalg passieren kann.

Der Faltenbalg wird vorzugsweise dort eingesetzt, wo eine möglichst gute, auch gasmäßige Trennung der Außenatmospäre von der Innenatmosphäre des Behandlungsraumes gewünscht ist. Er kann noch besser als die aus den Federlamellen bestehende Dichtungsanordnung das Entweichen von Dämpfen, Nebeln und Kondensaten verhindern; die Gas-Leckverluste können so niedrig gehalten werden, daß innerhalb des Behandlungsraumes ein anderer Druck als in der Außenatmosphäre bzw. in dem Bereich zwischen den Federlamellen und dem Faltenbalg aufrecht erhalten werden kann.

Besonders zweckmäßig ist schließlich, wenn die Abweiseinrichtungen bezüglich einer auf der Förderrichtung senkrecht stehenden Ebene derart symmetrisch ausgebildet sind, daß sie in Vorwärts- und in Rückwärtsrichtung der Förderbewegung wirksam sind.

Der Behandlungsraum kann beispielsweise eine Kabine sein, in welcher eine Oberflächenbehandlung, insbesondere eine Lackierung, der Werkstücke erfolgt, wobei die Wand, in welcher sich der Spalt befindet, eine im wesentlichen senkrechte Wand der Kabine ist.

In diesem Falle kann es besonders günstig sein, wenn die zu unterschiedlichen Sätzen gehörenden Federlamellen von den Abweiseinrichtungen in unterschiedliche Richtungen ausgebogen werden.

Der Behandlungsraum kann aber auch insbesondere derjenige eines Trockners oder Ofens sein, wobei die Wand, in der sich der Spalt befindet, die Decke des Trockner- bzw. Ofenraumes ist. In diesem Falle hat die Dichtungsanordnung die primäre Aufgabe, den Trockner- bzw. Ofenraum thermisch zu isolieren und das Entweichen der heißen Innenatmosphäre und das Eindringen kalter Umgebungsluft zu verhindern.

In diesem Falle ist es häufig günstig, wenn die zu unterschiedlichen Sätzen gehörenden Federlamellen von den Abweiseinrichtungen in derselben Richtung ausgebogen werden.

Ausführungsbeispiele der Erfindung werden nachfolgend anhand der Zeichnung näher erläutert; es zeigen
- Figur 1: perspektivisch die Innenansicht eines Teils der Wand einer Lackierkabine für Werkstücke;
- Figur 2: die Draufsicht auf den in Figur 1 dargestellten Ausschnitt der Wand;
- Figur 3: eine Ansicht, ählich der Figur 2, in der jedoch ein Teil der Dichtungsanordnung entfernt ist;
- Figur 4: eine Detailvergrößerung aus Figur 3;
- Figur 5: perspektivisch die Außenansicht des in den Figuren 1 bis 3 dargestellten Teiles der Kabinenwand;
- Figur 6: einen Schnitt durch den Deckenbereich eines Trockners senkrecht zur Bewegungsrichtung der zu trocknenden Gegenstände;
- Figur 7: einen Schnitt ähnlich der Figur 6, jedoch parallel zur Bewegungsrichtung der zu trocknenden Gegenstände.

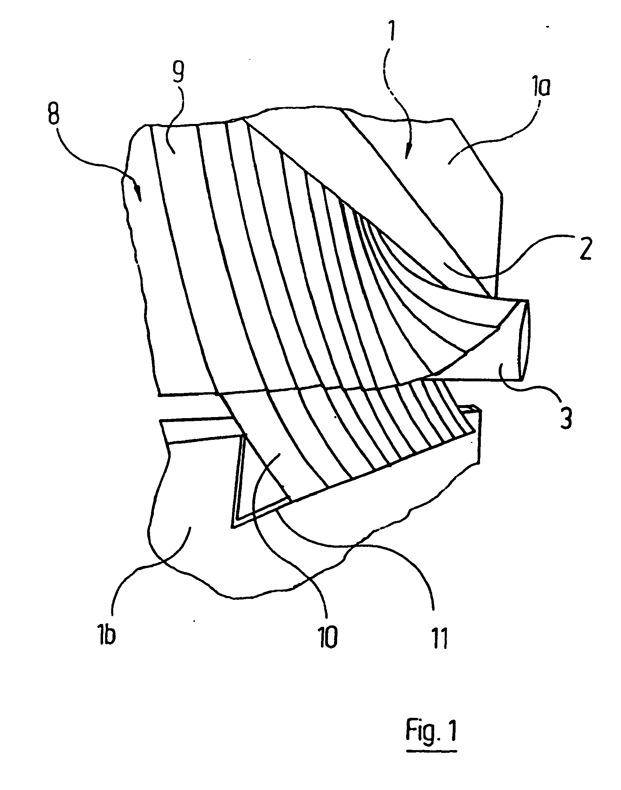

In Figur 1 ist mit dem Bezugszeichen 1 die Wand einer Kabine zum Tauchlackieren von Fahrzeugkarosserien dargestellt. Die Wand 1 besitzt einen oberen Wandabschnitt 1a und einen unteren Wandabschnitt 1b, die durch einen horizontalen Spalt 2 voneinander getrennt sind. Durch den Spalt 2 zwischen den Wandabschnitten 1a und 1b ragt von außen nach innen ein Tragarm 3. An dem Tragarm 3 können die zu behandelnden Werkstücke (nicht dargestellt) befestigt werden.

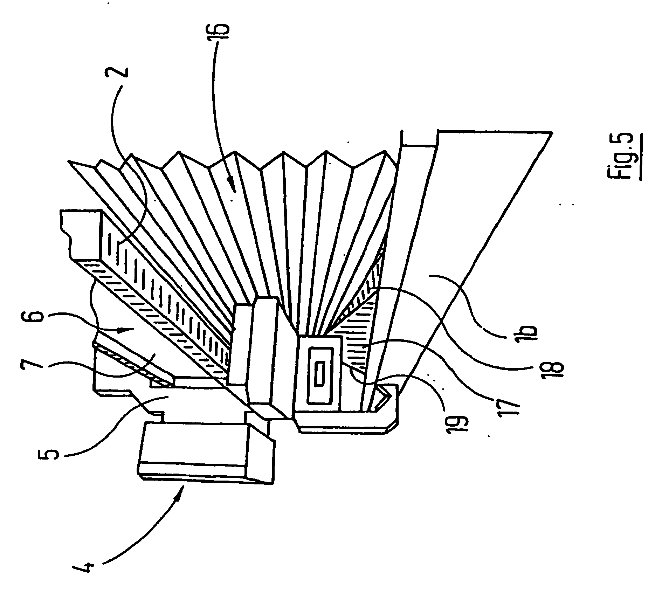

Der Tragarm 3 ist an seinem äußeren Ende, also demjenigen Ende, das dem in Figur 1 dargestellten gegenüberliegt, mit einem Fördersystem verbunden, welches im dargestellten Ausführungsbeispiel als Elektrohängebahn 4 ausgebildet ist. Die Elektrohängebahn 4 ist in Figur 5 dargestellt. Sie umgreift mit einem Fahrwerk 5, das einen Antriebsmotor enthält, eine Trag- und Führungsschiene 6, die sich im Bereich des oberen Wandabschnittes 1a entlang des oberen Randes des Spaltes 2 zwischen dem oberen Gehäuseabschnitt 1a und dem unteren Gehäuseabschnitt 1b erstreckt. An der etwas zurückgesetzten Seitenfläche 7 der Tragund Führungsschiene 6 sind in der Zeichnung nicht dargestellte Schleifleitungen vorgesehen, welche der Zuführung von elektrischem Strom zu dem Antriebsmotor der Elektrohängebahn 4 und der Zuführung von digitalen Informationen zur Steuerung der Elektrohängebahn 4 dienen. Unter der Kontrolle der von einem Zentralrechner zugeführten Befehle sowie ggf. von Befehlen, die in einem Speicher der Elektrohängebahn 4 selbst abgespeichert sind, bewegt sich die Elektrohängebahn 4 entlang der Führungs- und Tragschiene 6, wobei der Tragarm 3, der, wie in Figur 1 gezeigt, ins Innere der Behandlungskabine hineinragt, ebenfalls entlang des Spaltes 2 bewegt wird und dabei das Werkstück, das an ihm befestigt ist, mitnimmt und beispielsweise durch ein Behandlungsbad führt.

Damit keine Flüssigkeiten, Gase oder Dämpfe aus dem Inneren der Behandlungskabine entweichen oder in diese eindringen können, ist der Spalt 2 zwischen dem oberen Wandabschnitt 1a und dem unteren Wandabschnitt 1b durch eine Dichtungsanordnung verschlossen, die insgesamt das Bezugszeichen 8 trägt. Die Dichtungsanordnung 8 umfasst einen oberen Satz von nebeneinander, sich in seitlicher Richtung überlappenden Federlamellen 9, die mit ihrem oberen Rand an dem oberen Wandabschnitt 1a befestigt sind. Die Federlamellen 9 bestehen aus Federstahl oder einem anderen elastischen Material. Das Material sollte jedoch in dem Sinne formstabil sein, daß es beim Auftreffen eines Gegenstandes auf eine Schmalseite nicht "einbeult" sondern nur in der Weise flächig ausbiegt, wie dies in der Zeichnung dargestellt ist.

Die Dichtungsanordnung 8 umfasst außerdem einen unteren Satz von Federlamellen 10, die mit ihrem unteren Rand an einem Winkelblech 11 befestigt sind, das seinerseits an dem unteren Wandabschnitt 1b angebracht ist. Die Federlamellen 10 sind auf diese Weise in ihrer Ruheposition gegen die Vertikale geneigt, und zwar so, daß die von ihnen gebildeten Flächen Spritzflüssigkeit ins Innere der Behandlungskabine zurückführen.

Die unteren Enden der oberen Federlamellen 9 überlappen die oberen Enden der unteren Federlamellen 10 und zwar in der Weise, daß sie auf der zum Inneren der Behandlungskabine gewandten Seite der unteren Federlamellen 10 in ihrer Ruhelage federnd anliegen.

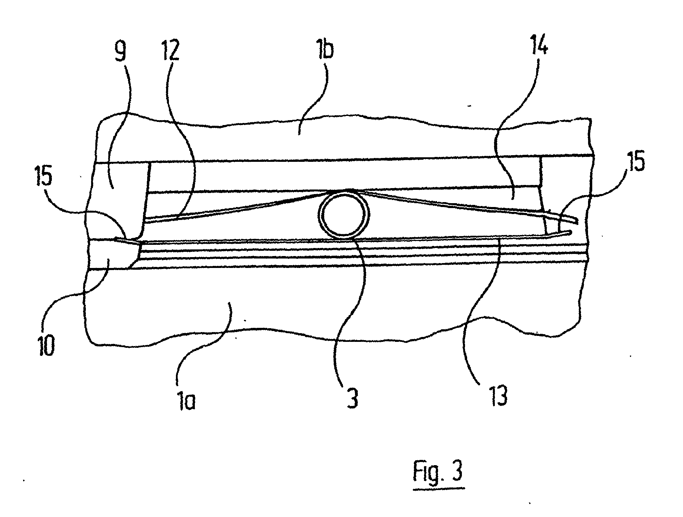

Die oberen Federlamellen 9 und die unteren Federlamellen 10 werden in der Umgebung derjenigen Stelle, an der sie von dem Tragarm 3 durchstoßen werden, aus ihrer Ruhelage, in der ihre Endbereiche aneinander anliegen, ausgebogen. Dies geschieht mit Hilfe von zwei Abweiseinrichtungen 12, 13, die insbesondere in Figur 3 zu erkennen sind.

Die obere Abweiseinrichtung 12, die mit den oberen Federlamellen 9 zusammenwirkt, besitzt die Form eines Blechstreifens, der im wesentlichen symmetrisch über den Tragarm 3 geführt ist und so verdreht ist, daß er- im Bereich seiner beiden gegenüber liegenden Enden eine Orientierung hat, die der Neigung der oberen Federlamellen 9 in deren Ruhestellung entspricht, während er in dem Bereich, in dem er am Tragarm 3 befestigt ist, im wesentlichen an der Kontur des Tragarmes 3 anliegt, also im wesentlichen horizontal verläuft. Die äußeren Enden der oberen Abweiseinrichtung 12 sind an einem Blechschild 14 befestigt, das seinerseits mit der Elektrohängebahn 4 verbunden und von dieser mitbewegt ist. Das Blechschild 14 ist ebenfalls gegenüber der Vertikalen in einer Weise geneigt, daß auf das Blechschild 14 auftreffende Flüssigkeit ins Innere der Behandlungskabine zurückläuft.

Wenn der Tragarm 3 und damit auch das Blechschild 14 sowie die obere Abweiseinheit 12 von der Elektrohängebahn 4 entlang des Schlitzes 2, z. B. in Figur 3 nach links, bewegt werden, untergreift des vorlaufende Ende der oberen Abweiseinrichtung 12 die benachbarte obere Federlamelle 9 in deren unterem Bereich. Diese Federlamelle 9 wird daher von der oberen Abweiseinrichtung 12 unten angehoben und löst sich dabei von der entsprechenden unteren Federlamelle 10. Mit der Weiterbewegung der oberen Abweiseinrichtung 12 wird die obere Federlamelle 9, wie dies aus Figur 1 deutlich hervorgeht, soweit angehoben, daß sie oberhalb des Tragarmes 3 vorbeigleitet. Der Abstand, den die obere Abweiseinrichtung 12 von dem Blechschild 14 besitzt, nimmt dabei in Richtung auf den Tragarm 3 zu, so daß die obere Abweiseinrichtung 12 die oberen Federlamellen 9 immer etwa in gleichem Abstand von deren unteren Rändern abstützt. Von der Seite her gesehen folgt also der Verlauf der oberen Abweiseinrichtung 12 dem in Figur 1 dargestellten Verlauf der unteren Ränder der oberen Federlamellen 9 parallel.

Die obere Abweiseinrichtung 12 kann auch aus einem Rundprofil, insbesondere aus Kunststoff, bestehen.

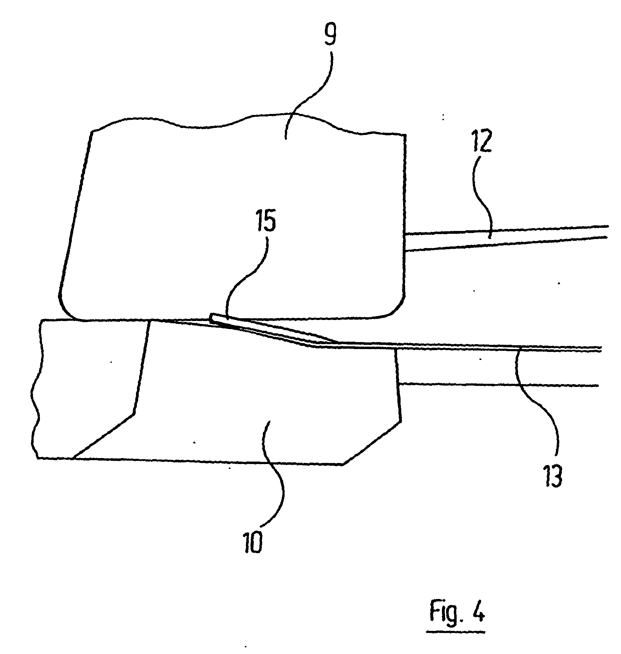

Auch die untere Abweiseinrichtung 13 wird von einem Blechstreifen gebildet, der an dem Blechschild 14 befestigt ist. Seine beiden gegenüberliegenden Enden sind etwas aus der Zeichenebene der Figuren 3 und 4 nach oben, also zur Innenseite der Behandlungskabine hin, herausgebogen und gleichzeitig etwas verdreht, so daß die Neigung ihrer Fläche etwa der Neigung der unteren Federlamellen 10 in deren Ruheposition entspricht. Bewegt sich die untere Abweiseinrichtung 13 gemeinsam mit der Elektrobahn 4 entlang des Spaltes, in Figuren 3 und 4 also beispielsweise nach links, so drückt das entsprechende herausgebogene Ende 15 den freien Rand der unteren Federlamelle 10, auf die es trifft, nach unten und biegt dadurch den oberen Endbereich der unteren Federlamelle 10 in Richtung auf die Außenseite der Behandlungskabine.

Wie insbesondere Figur 3 deutlich macht, verläuft die untere Abweiseinrichtung 13 im wesentlichen parallel zum Spalt 2 umd tangential an dem Tragarm 3 vorbei. Einen entsprechenden Bewegungsweg durchlaufen die oberen, freien Randbereiche der unteren Federlamellen 10.

Wie die obere Beschreibung deutlich macht, werden die oberen Federlamellen 9 und die unteren Federlamellen 10 durch die beiden Abweiseinrichtungen 12, 13 in der Umgebung des Tragarmes 3 in entgegengesetzten Richtungen ausgebogen: Die oberen Federlamellen 9 werden in Richtung auf den Innenraum der Behandlungskabine, die unteren Federlamellen 10 dagegen in Richtung auf die Außenseite der Behandlungskabine verbogen.

Wie Figur 5 zeigt, erstreckt sich entlang der gesamten Länge des Spaltes 2 auf der Außenseite der Dichtungsanordnung 8 als weiteres Dichtungselement ein Faltenbalg 16, dessen Faltung außerhalb des Bereiches des Tragarmes 3 horizontal verläuft. An der Elektrohängebahn 4 ist ein Abweiser 17 befestigt, der zwei gegensinnig zum Tragarm 3 hin ansteigende Rampenflächen 18, 19 aufweist. Bewegt sich die Elektrohängebahn 4 in Figur 5 entlang des Spaltes 2, so wird die Unterseite des Faltenbalges 16 durch die vorlaufende Rampenfläche 18 auf eine Höhe angehoben, auf der sie über dem Tragarm 3 durchgleiten kann. Nach Passieren des Tragarmes 3 senkt sich die Unterseite des Faltenbalges 16 wieder entlang der zweiten Rampenfläche 19 ab.

Die oben beschriebene Tauchlackiervorrichtung arbeitet wie folgt:

Es sei davon ausgegangen, daß sich an dem inneren, in Figur 1 dargestellten Ende des Tragarmes 3 ein Werkstück befindet, welches durch ein Lackbad geführt werden soll. In demjenigen Bereich, in dem der Tragarm 3 die Dichtungsanordnung 8 durchstößt, sind die Federlamellen 9, 10 in der in Figur 1 dargestellten Weise verbogen. Gleichwohl ist hier kein freier Durchtritt von spritzender Flüssigkeit möglich, da diese durch das Blechschild 14 aufgefangen und aufgrund dessen Neigung wieder in den Innenraum der Behandlungskabine zurückgeführt wird. Auch außerhalb des Durchstoßungsbereiches des Tragarmes 3 besitzen die Federlamellen 9, 10 eine Neigung, bei welcher auftreffende Spritzflüssigkeit in das Innere der Behandlungskabine zurückfließt.

Durch den auf der Außenseite der Dichtungsanordnung 8 angebrachten Faltenbalg 16 wird zusätzlich eine nahezu gasdichte Abdichtung erzielt. Jedenfalls sind die Leckverluste, die der Faltenbalg 16 noch zuläßt, so gering, daß im Innenraum der Behandlungskabine durch eine entsprechende Luftzufuhr ein - wenn auch geringer - Überdruck aufrecht erhalten werden kann, so daß ein unerwünschtes Eindringen von Luft aus der Umgebungsatmosphäre verhindert werden kann.

Bewegt sich die Elektrohängebahn 4 mit dem Werkstück entlang des Spalts 2, so werden mit Hilfe der oberen Abweiseinrichtung 12 die oberen Federlamellen 9, mit Hilfe der unteren Abweiseinrichtung 13 die unteren Federlamellen 10 elastisch verbogen und mit Hilfe des Abweisers 17 der untere Rand des Faltenbalges 16 angehoben. Nach dem Passieren des Tragarmes 3 kehren die Federlamellen 9, 10 sowie der Faltenbalg 16 wieder in ihre Schließstellung zurück.

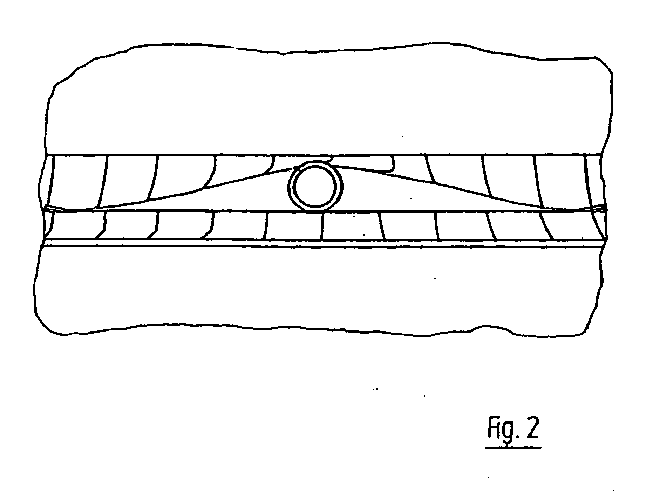

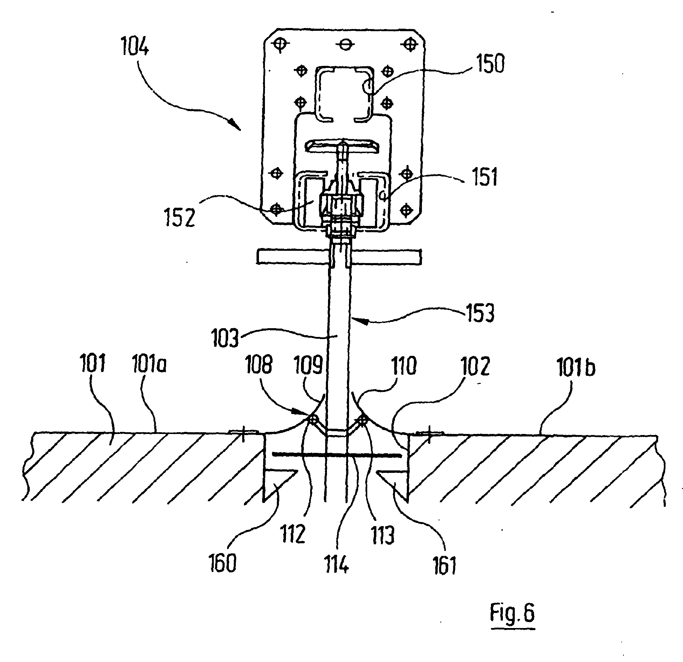

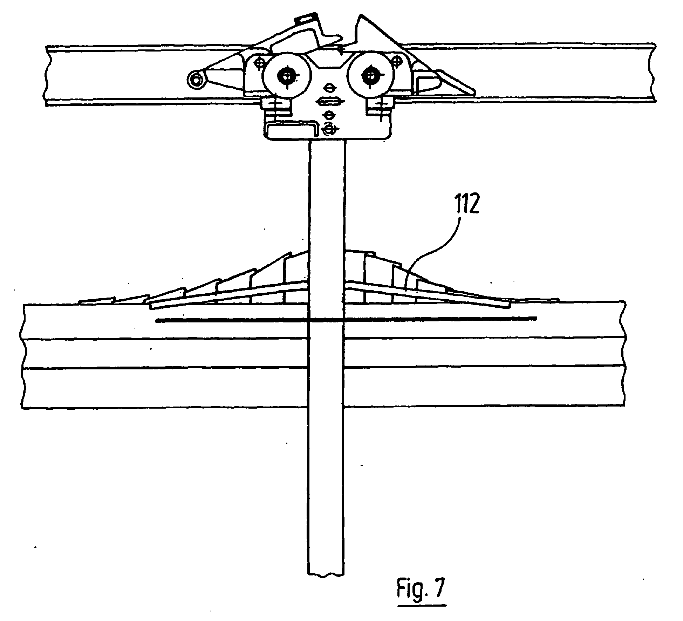

In den Figuren 6 und 7 ist ein weiteres Ausführungsbeispiel der Erfindung dargestellt, das dem oben anhand der Figuren 1 bis 5 beschriebenen Ausführungsbeispiel weitgehend ähnelt. Entsprechende Elemente sind daher mit denselben Bezugszeichen zuzüglich 100 gekennzeichnet.

Bei dem in den Figuren 6 und 7 dargestellten Beispiel ist die Behandlungsvorrichtung ein Trockner, durch dessen Trockenraum die zu trocknenden Gegenstände mit Hilfe eines Schleppkreis-Förderers 104 ("Power-and-Free"Förderers) hindurchgeführt werden. Dieser Förderer 104 umfaßt in bekannter Weise eine obere Schiene 150, in welcher eine nicht dargestellte Förderkette geführt ist, sowie eine hierzu parallel laufende untere Tragschiene 151, an welcher die Laufwerke 152 der einzelnen Fördergehänge 153 geführt sind. Eines dieser Fördergehänge 153 ist mit seinem oberen Bereich in den Figuren 6 und 7 gezeigt.

Jedes Fördergehänge 153 besitzt einen vertikal verlaufenden Tragarm 103, der einen Spalt 102 in der Decke 101 des Trockners durchsetzt. Eine Dichtungsanordnung 108 dichtet diesen Spalt 102 ab. Sie umfaßt einen auf der einen Seite des Spaltes 102 liegenden Satz von Federlamellen 109 sowie einen zweiten, auf der gegenüberliegenden Seite des Spaltes 102 liegenden Satz von Federlamellen 110, die jeweils mit ihren von dem Spalt 102 abgewandten Bereichen an dem zugehörigen Abschnitt 101a bzw. 101b der Decke 101 befestigt sind und sich in der Ruhestellung, entfernt von dem Tragarm 103, innerhalb des jeweiligen Satzes seitlich und von Satz zu Satz mit ihren aufeinander zu zeigenden Bereichen überlappen.

Der Tragarm 103 trägt auf gegenüberliegenden Seiten jeweils eine Abweiseinrichtung 112, 113 in Form eines Blechstreifens. Diese Abweiseinrichtungen 112, 113 sind anders als beim zuerst beschriebenen Ausführungsbeispiel zu einer senkrecht zur Zeichenebene der Figur 6 stehenden Ebene symmetrisch und jeweils so ausgebildet, wie dies oben für die Abweiseinrichtung 12 der Vorrichtung der Figuren 1 bis 5 beschrieben wurde. Die Abweiseinrichtungen 112, 113 biegen daher bei der Passage des Tragarms 103 die Federlamellen 109, 110 der beiden Sätze in derselben Richtung symmetrisch nach oben aus.

Unterhalb der Federlamellen 109, 110 ist an dem Tragarm 103 ein horizontales Schild 114 befestigt, das mit seinen parallel zur Bewegungsrichtung des Förderers 104 verlaufenden Randbereichen oberhalb zweier Leisten 160, 161 liegt, die an den Seitenwänden des Spaltes 102 angebracht sind.

Die Dichtungsanordnung 108 verhindert zusammen mit dem Schild 114 das Entweichen der heißen Gase der Innenatmosphäre des Trockners und das Eindringen von kalter Frischluft bei der Passage des Tragarms 103, wodurch der thermische Wirkungsgrad des Trockners verbessert wird.

## Patentansprüche

1. Vorrichtung zur Behandlung von Werkstücken mit
a) einem Behandlungsraum, in welchem sich einen Behandlungsbereich für die Werkstücke befindet;
b) einem Förderer (104), welcher die Werkstücke durch den Behandlungsraum führt und selbst aufweist:
ba) außerhalb des Behandlungsraumes liegende Förderelemente, insbesondere Antriebselemente;
bb) mindestens einen Tragarm (3, 103), der sich durch einen entlang des Bewegungsweges des Förderers (104) verlaufenden Spalt (2, 102) in einer Wand (1, 101) des Behhandlungsraumes erstreckt;
c) einer Dichtungsanordnung (8, 108), welche den Spalt (2, 102) in der Wand (1, 101) des Behandlungsraumes abdichtet, jeweils in der Umgebung des Tragarmes (3, 103) lokal zur Passage des Tragarmes (3, 103) geöffnet wird und eine Vielzahl von beweglichen Dichtelementen (109, 110) aufweist;
**dadurch gekennzeichnet, daß**
d) die Dichtungsanordnung (8; 108) umfasst;
da) einen ersten Satz von Federlamellen (9; 109), die sich seitlich überlappen und in einem von dem Spalt (2; 102) abgewandten Bereich an dem auf einer Seite des Spaltes (2; 102) liegenden Abschnitt (1a; 101a) der Wand (1; 101) des Behandlungsraumes befestigt sind;
db) einen zweiten Satz von Federlamellen (10; 110), die sich seitlich überlappen und in einem von dem Spalt (2; 102) abgewandten Bereich an dem auf der anderen Seite des Spalts (2, 102) liegenden Abschnitt (1b; 101b) der Wand (1; 101) des Behandlungsraumes befestigt sind;
wobei
dc) die einander zugewandten Endbereiche der zum ersten Satz gehörenden Federlamellen (9; 109) und der zum zweiten Satz gehörenden Federlamellen (10; 110) in ihrer Ruhestellung einander federnd überlappen;
e) eine erste Abweiseinrichtung (12; 112) vorgesehen ist, welche von dem Förderer (4; 104) gemeinsam mit dem Tragarm (3; 103) bewegbar ist und bei ihrer Bewegung die zum ersten Satz gehörenden Federlamellen (9; 109) untergreift und so elastisch ausbiegt, daß der Tragarm (3; 103) die zum ersten Satz gehörenden Federlamellen (9; 109) passieren kann;
f) eine zweite Abweiseinrichtung (13; 113) vorgesehen ist, welche von dem Förderer (4; 104) gemeinsam mit dem Tragarm (3; 103) bewegbar ist und die zum zweiten Satz gehörenden Federlamellen (10; 110) bei ihrer Bewegung so elastisch ausbiegt, daß der Tragarm (3; 103) die zum zweiten Satz gehörenden Federlamellen (10; 110) passieren kann.

2. Vorrichtung nach Anspruch 1, **dadurch gekennzeichnet,**
**daß** die Federlamellen (9, 10; 109, 110) aus Federstahl bestehen.

3. Vorrichtung nach Anspruch 1, **dadurch gekennzeichnet,**
**daß** die Federlamellen (9, 10; 109, 110) aus Edelstahl bestehen.

4. Vorrichtung nach Anspruch 1, **dadurch gekennzeichnet,**
**daß** die Federlamellen (9, 10; 109, 110) aus ggf. verstärktem Kunststoff bestehen.

5. Vorrichtung nach einem der vorhergehenden Ansprüche,
**dadurch gekennzeichnet, daß** ein Schild (14; 114) vorgesehen ist, das gemeinsam mit dem Tragarm (3; 103) bewegbar ist und denjenigen Bereich der Dichtungsanordnung (8; 108) abdeckt, in dem die Federlamellen (9, 10; 109, 110) aus ihrer Ruheposition ausgebogen sind.

6. Vorrichtung nach einem der vorhergehenden Ansprüche,
**dadurch gekennzeichnet, daß** die Abweiseinrichtungen (12, 13 112, 113) Blechstreifen sind, die so gebogen sind, daß ihre Flächen überall etwa parallel zu den an ihnen anliegenden Bereichen der Federlamellen (9, 10; 109, 110) verlaufen.

7. Vorrichtung nach Anspruch 6, **dadurch gekennzeichnet,**
**daß** die Abweiseinrichtungen (12, 13; 112, 113) so geführt sind, daß sie überall in ungefähr dem gleichen Abstand von den Rändern der Federlamellen (9, 10 ; 109, 110) an diesen anliegen.

8. Vorrichtung nach einem der vorhergehenden Ansprüche,
**dadurch gekennzeichnet, daß** der Spalt (2) zwischen dem ersten Abschnitt (1a) und dem zweiten Abschnitt (1b) der Wand (1) des Behandlungsraumes an der Außenseite zusätzlich durch einen Faltenbalg (16) verschlossen ist und ein Abweiser (17) vorgesehen ist, der mit dem Tragarm (3) mitbewegbar ist und mindestens eine Rampenfläche (18, 19) aufweist, auf welcher ein Rand des Faltenbalgs (16) lokal anliegt und welcher den Rand des Faltenbalgs (16) so verschiebt, daß der Tragarm (3) den Faltenbalg (16) passieren kann.

9. Vorrichtung nach einem der vorhergehenden Ansprüche,
**dadurch gekennzeichnet, daß** die Abweiseinrichtungen (12, 13, 17) gegenüber einer senkrecht auf der Förderrichtung stehenden Ebene derart symmetrisch ausgebildet sind, daß sie in Vorwärts- und in Rückwärtrichtung der Förderbewegung wirksam sind.

10. Vorrichtung nach einem der vorhergehenden Ansprüche,
**dadurch gekennzeichnet, daß** der Behandlungsraum eine Kabine ist, in welcher eine Oberflächenbehandlung, insbesondere Lackierung, der Werkstücke stattfindet, und daß die Wand (1), in welcher sich der Spalt (2) befindet, eine im wesentlichen senkrechte Wand der Kabine ist.

11. Vorrichtung nach Anspruch 10, **dadurch gekennzeichnet,**
**daß** die zu unterschiedlichen Sätzen gehörenden Federlamellen (9, 10) von den Abweiseinrichtungen (12, 13) in unterschiedliche Richtungen ausgebogen werden.

12. Vorrichtung nach einem der Ansprüche 1 bis 9, **dadurch**
**gekennzeichnet, daß** der Behandlungraum derjenige eines Trockners oder Ofens ist und daß die Wand (101), in der sich der Spalt (102) befindet, die Decke des Trocken- bzw. Ofenraumes ist.

13. Vorrichtung nach Anspruch 12, **dadurch gekennzeichnet,**
**daß** die zu unterschiedlichen Sätzen gehörenden Federlamellen (109, 110) von den Abweiseinrichtungen (112, 113) in dieselbe Richtung ausgebogen werden.

## Claims

1. An apparatus for the treatment of workpieces with
a) a treatment chamber, in which a treatment zone for the workpieces is located;
b) a conveyor (104), which guides the workpieces through the treatment chamber and itself comprises:
ba) conveyor elements, in particular drive elements, outside the treatment chamber;
bb) at least one carrier arm (3; 103), which extends through a slot (2; 102), extending along the conveyor's (104) path of motion, in a wall (1; 101) of the treatment chamber;
c) a sealing arrangement (8; 108), which seals the slot (2; 102) in the wall (1; 101) of the treatment chamber, is opened in each case locally in the vicinity of the carrier arm (3; 103) to allow passage of the carrier arm (3; 103) and comprises a plurality of mobile sealing elements (109, 110);
**characterised in that**
d) the sealing arrangement (8; 108) comprises;
da) a first set of spring strips (9; 109), which overlap laterally and are attached in an area remote from the slot (2; 102) to a portion (1a; 101a) lying on one side of the slot (2; 102) of the wall (1; 101) of the treatment chamber;
db) a second set of spring strips (10; 110), which overlap laterally and are attached in an area remote from the slot (2; 102) to a portion (1b; 101b) lying on the other side of the slot (2; 102) of the wall (1; 101) of the treatment chamber;
wherein,
dc) in their resting position, the mutually facing end zones of the spring strips (9; 109) belonging to the first set and of the spring strips (10; 110) belonging to the second set overlap resiliently;
e) a first deflecting device (12; 112) is provided which is movable by the conveyor (4; 104) together with the carrier arm (3; 103) and, when moved, engages beneath the spring strips (9, 109) belonging to the first set and bends them out resiliently in such a manner that the carrier arm (3; 103) can pass through the spring strips (9; 109) belonging to the first set;
f) a second deflecting device (13; 113) is provided which is movable by the conveyor (4; 104) together with the carrier arm (3; 103) and, when moved, bends out the spring strips (10, 110) belonging to the second set resiliently in such a manner that the carrier arm (3; 103) can pass through the spring strips (10; 110) belonging to the second set.

2. An apparatus according to claim 1, **characterised in that** the spring strips (9, 10; 109, 110) consist of spring steel.

3. An apparatus according to claim 1, **characterised in that** the spring strips (9, 10; 109, 110) consist of stainless steel.

4. An apparatus according to claim 1, **characterised in that** the spring strips (9, 10; 109, 110) consist of optionally reinforced plastic.

5. An apparatus according to any of the preceding claims, **characterised in that** a shield (14; 114) is provided, which is movable together with the carrier arm (3; 103) and covers that zone of the sealing arrangement (8; 108) in which the spring strips (9, 10; 109, 110) are bent out of their resting position.

6. An apparatus according to any of the preceding claims, **characterised in that** the deflecting devices (12, 13; 112, 113) are strips of sheet metal which are bent in such a manner that the surfaces thereof extend everywhere approximately parallel to the areas of the spring strips (9, 10; 109, 110) lying thereagainst.

7. An apparatus according to claim 6, **characterised in that** the deflecting devices (12, 13; 112, 113) are guided such that they lie against the spring strips (9, 10; 109, 110) everywhere at approximately the same distance from the edges thereof.

8. An apparatus according to any of the preceding claims, **characterised in that** the slot (2) between the first portion (1a) and the second portion (1b) of the wall (1) of the treatment chamber is additionally closed on the outside by a bellows (16) and a deflector (17) is provided, which is movable with the carrier arm (3) and comprises at least one sloping face (18, 19), against which one edge of the bellows (16) rests locally and which displaces the edge of the bellows (16) in such a manner that the carrier arm (3) can pass through the bellows (16).

9. An apparatus according to any of the preceding claims, **characterised in that** the deflecting devices (12, 13, 17) are configured symmetrically with regard to a plane perpendicular to the direction of conveying in such a manner that they are effective in the forwards and backwards direction of the conveying motion.

10. An apparatus according to any of the preceding claims, **characterised in that** the treatment chamber is a booth in which the workpieces are surface treated, in particular coated, and that the wall (1) in which the slot (2) is located is a substantially vertical wall of the booth.

11. An apparatus according to claim 10, **characterised in that** the spring strips (9, 10) belonging to the different sets are bent out in different directions by the deflecting devices (12, 13).

12. An apparatus according to any of claims 1 to 9, **characterised in that** the treatment chamber is the chamber of a dryer or oven and that the wall (101) in which the slot (102) is located is the ceiling of the dryer or oven chamber.

13. An apparatus according to claim 12, **characterised in that** the spring strips (109, 110) belonging to the different sets are bent out in the same direction by the deflecting devices (112, 113).

## Revendications

1. Dispositif de traitement de pièces usinées, comprenant
a) une chambre de traitement dans laquelle se trouve une zone de traitement affectée auxdites pièces ;
b) un convoyeur (104) guidant lesdites pièces à travers ladite chambre de traitement et comportant, à son tour :
ba) des éléments de convoyage, en particulier des éléments d'entraînement situés à l'extérieur de la chambre de traitement ;
bb) au moins un bras de support (3, 103), traversant un interstice (2, 102) réservé dans une paroi (1, 101) de la chambre de traitement et s'étendant le long du trajet de mouvement du convoyeur (104) ;
c) un ensemble d'étanchement (8, 108) qui assure l'étanchéité de l'interstice (2, 102) réservé dans la paroi (1, 101) de la chambre de traitement, est ouvert localement dans l'environnement du bras de support (3, 103) pour permettre le passage dudit bras de support (3, 103), et présente une multiplicité d'éléments mobiles d'étanchement (109, 110);
**caractérisé par le fait**
d) **que** l'ensemble d'étanchement (8 ; 108) englobe :
da) un premier jeu de lamelles élastiques (9 ; 109) se chevauchant latéralement et fixées, dans une région tournée à l'opposé de l'interstice (2 ; 102), sur un tronçon (1a ; 101a) de la paroi (1 ; 101) de la chambre de traitement qui est situé d'un côté dudit interstice (2 ; 102) ;
db) un second jeu de lamelles élastiques (10 ; 110) se chevauchant latéralement et fixées, dans une région tournée à l'opposé de l'interstice (2 ; 102), sur un tronçon (1b ; 101b) de la paroi (1 ; 101) de la chambre de traitement qui est situé de l'autre côté dudit interstice (2 ; 102) ;
sachant que
de) les régions extrêmes, se faisant mutuellement face, des lamelles élastiques (9 ; 109) appartenant au premier jeu, et des lamelles élastiques (10; 110) appartenant au second jeu, se chevauchent réciproquement de manière élastique dans leur position de repos ;
e) **qu'**il est prévu un premier système déflecteur (12 ; 112) auquel le convoyeur (4 ; 104) peut imprimer des mouvements conjointement au bras de support (3 ; 103) et qui, lors de son mouvement, emprisonne par-dessous les lamelles élastiques (9 ; 109) faisant partie du premier jeu, et provoque leur flexion élastique de façon telle que ledit bras de support (3 ; 103) puisse franchir lesdites lamelles élastiques (9 ; 109) faisant partie du premier jeu ;
f) **qu'**il est prévu un second système déflecteur (13 ; 113) auquel le convoyeur (4 ; 104) peut imprimer des mouvements conjointement au bras de support (3 ; 103) et qui, lors de son mouvement, provoque une flexion élastique des lamelles élastiques (10 ; 110) faisant partie du second jeu, de façon telle que ledit bras de support (3 ; 103) puisse franchir lesdites lamelles élastiques (10 ; 110) faisant partie du second jeu.

2. Dispositif selon la revendication 1, **caractérisé par le fait que** les lamelles élastiques (9, 10 ; 109, 110) consistent en de l'acier à ressorts.

3. Dispositif selon la revendication 1, **caractérisé par le fait que** les lamelles élastiques (9, 10 ; 109, 110) consistent en de l'acier fin.

4. Dispositif selon la revendication 1, **caractérisé par le fait que** les lamelles élastiques (9, 10; 109, 110) consistent en une matière plastique éventuellement renforcée.

5. Dispositif selon l'une des revendications précédentes, **caractérisé par** la présence d'une platine (14 ; 114) pouvant être mise en mouvement conjointement au bras de support (3 ; 103), et recouvrant la région de l'ensemble d'étanchement (8 ; 108) dans laquelle les lamelles élastiques (9, 10 ; 109, 110) sont fléchies à partir de leur position de repos.

6. Dispositif selon l'une des revendications précédentes, **caractérisé par le fait que** les systèmes déflecteurs (12, 13 ; 112, 113) sont des bandes en tôle coudées de telle sorte que leurs surfaces s'étendent, en tous points, à peu près parallèlement aux régions des lamelles élastiques (9, 10 ; 109, 110) qui portent contre lesdites bandes.

7. Dispositif selon la revendication 6, **caractérisé par le fait que** les systèmes déflecteurs (12, 13 ; 112, 113) sont guidés de façon telle qu'ils soient appliqués en tous points contre les lamelles élastiques, selon sensiblement la même distance vis-à-vis des bords desdites lamelles élastiques (9, 10 ; 109, 110).

8. Dispositif selon l'une des revendications précédentes, **caractérisé par le fait que** l'interstice (2) est additionnellement obturé par un soufflet (16) à la face extérieure, entre le premier tronçon (1a) et le second tronçon (1b) de la paroi (1) de la chambre de traitement, et il est prévu un déflecteur (17) qui peut être mis en mouvement conjointement au bras de support (3) ; est muni d'au moins une surface inclinée (18, 19) sur laquelle un bord dudit soufflet (16) est appliqué localement ; et fait coulisser ledit bord dudit soufflet (16) de façon telle que ledit bras de support (3) puisse franchir ledit soufflet (16).

9. Dispositif selon l'une des revendications précédentes, **caractérisé par le fait que** les systèmes déflecteurs (12, 13, 17) sont de réalisation symétrique vis-à-vis d'un plan se dressant perpendiculairement à la direction du convoyage, de telle manière qu'ils soient opérants dans les directions d'avance et de recul du mouvement de convoyage.

10. Dispositif selon l'une des revendications précédentes, **caractérisé par le fait que** la chambre de traitement est une cabine dans laquelle il est procédé à un traitement de surface, notamment à un laquage des pièces usinées ; et **par le fait que** la paroi (1), dans laquelle l'interstice (2) est réservé, est une paroi sensiblement verticale de ladite cabine.

11. Dispositif selon la revendication 10, **caractérisé par le fait que** les languettes élastiques (9, 10), faisant partie de différents jeux, sont fléchies dans différentes directions par les système déflecteurs (12, 13).

12. Dispositif selon l'une des revendications 1 à 9, **caractérisé par le fait que** la chambre de traitement est celle d'un sécheur ou d'un four ; et **par le fait que** la paroi (101), dans laquelle l'interstice (102) est réservé, se présente comme la voûte respective de la chambre de séchage ou de la cavité du four.

13. Dispositif selon la revendication 12, **caractérisé par le fait que** les lamelles élastiques (109, 110), faisant partie de différents jeux, sont fléchies dans la même direction par les systèmes déflecteurs (112,113).
